# EUROPÄISCHE PATENTSCHRIFT

(11) **EP 1 215 482 B1**
(45) Veröffentlichungstag und Bekanntmachung des Hinweises auf die Patenterteilung: **12.06.2019**
(21) Anmeldenummer: 01128798.4
(22) Anmeldetag: 04.12.2001
(51) Int. Cl.: G01N 23/02, G01V 5/00

(54) **Vorrichtung zur Durchleuchtung von Objekten**
Object examination device
Dispositif d'inspection d'objets

(30) Priorität: 13.12.2000 DE 10062214
(43) Veröffentlichungstag der Anmeldung: 19.06.2002
(73) Patentinhaber: Smiths Heimann GmbH, 65205 Wiesbaden (DE)
(72) Erfinder: Springer, Klaus, 65618 Selters-Eisenbach (DE); Haunschild, Norbert, 65326 Aarbergen (DE)
(74) Vertreter: Greif, Thomas

(56) Entgegenhaltungen:
- EP-A- 0 485 872
- WO-A-98/03888
- DE-A1- 4 137 510
- US-A- 4 599 740
- US-A- 6 088 423

## Beschreibung

Die Erfindung betrifft eine Vorrichtung zur Durchleuchtung von Objekten.

Eine Einrichtung zur Erkennung von insbesondere Spreng- oder Suchtstoffe in Gepäckstücken beschreibt die EP 0 485 872 A2. Hierzu wird das Gepäckstück aus mehreren Ansichten mit zwei oder drei Röntgenquellen durchleuchtet, um daraus eine näherungsweise dreidimensionale Dichterekonstruktion des Gepäckstückes zu erstellen. Die Röntgenquellen befinden sich dabei zueinander versetzt an den beiden oberen Ecken des im Querschnitt rechteckigen Transportschachtes, durch welches das Gepäckstück läuft. Dabei sind zwei Röntgenquellen in direkter Nähe hintereinander angeordnet. Jeder der Röntgenquelle ist eine L-förmige Detektorzeile gegenüberliegend zugeordnet. Durch diese Einrichtung wird ein sogenanntes Multi-View aus drei Strahlrichtungen geschaffen, wobei alle Strahlungsebenen senkrecht zum Transportband verlaufen.

Aus der WO 9712229 sind ein Verfahren und eine Vorrichtung zur Detektion von Schmuggelware, beispielsweise Explosivstoffen, Drogen oder Geld bekannt. Hierbei wird ein Tomograph verwendet, mit dessen Hilfe ein als Schmuggelware detektiertes Reisegepäckstück aus unterschiedlichen Ansichten betrachtet wird. In einem Ausführungsbeispiel ist ein Röntgengenerator im Tomographen eingebunden. Dieser Röntgengenerator ist dabei an einem C-Arm befestigt. Eine Detektoranordnung ist dem Röntgengenerator gegenüberliegend gleichfalls am C-Arm fest angeordnet. Für die unterschiedlichen Aufnahmen wird der C-Arm und damit der Röntgengenerator mit Detektoranordnung zum zu durchleuchtenden Reisegepäckstück in gleichbleibender Ebene verstellt. Aus der ermittelten Absorptionsrate des Gegenstandes im Reisegepäckstück wird die effektive Atomnummer Z_{eff} ermittelt. Gleichzeitig werden die Masse und die Dichte des detektierten Gegenstandes über einen Algorithmus bestimmt.

Aus US 6 088 423 A ist eine gattungsgemäße Vorrichtung bekannt, die wenigsten drei Röntgenstrahlquellen und drei Detektoranordnungen aufweist, um mit Hilfe von drei unterschiedlichen Strahlungsrichtungen ein dreidimensionales Abbild zu erzeugen. Dabei sind die Strahlengänge senkrecht zur Transportrichtung ausgerichtet. Dies bedeutet einen großen Platzbedarf und damit eine große Vorrichtung.

Aus der DE 198 23 448 A1 ist eine Vorrichtung zum Prüfen von Gegenständen mittels Röntgenstrahlung bekannt, bei der durch eine Blende ein relevanter Teil der Strahlung ausgeblendet wird, sodass ein Strahlungskegel entsteht, der zu linienförmigen Aufnehmern gerichtet ist, welche ein zeitversetztes Scan-Signal aus unterschiedlichen Winkelrichtungen erzeugen.

Die WO 98/03888 A betrifft eine Vorrichtung und ein Verfahren zum Rastern von Flugzeug-Handgepäck. Ausgehend von bekannten Konzepten, Techniken und Fertigkeiten wird ein Basissensorsystem von beispielsweise 15 Fächerstrahl -Röntgenquellen und Linienanordnungen vorgeschlagen, bei dem alle Fächer in einer X/Y-Ebene senkrecht zu der Z-Richtung der Bewegung des Bandes fixiert werden. Diese können in fünf Gruppen von jeweils drei Quellen in fünf aufeinander folgenden Rollen-Zwischenspalten des Bandtransportmechanismus aufgenommen werden. Damit soll eine verkleinerte Version des neuen CT-Projektes geschaffen werden.

Die EP 0 485 872 A beschäftigt sich mit einer Einrichtung zur Erkennung von stickstoff-, phosphor-, chlor- und / oder sauerstoffhaltigen Substanzen. Für die eindeutige Rekonstruktion der Massendichteverteilung sind zwei an einer Kante des Transportschachtes vorgesehene Röntgenquellen relativ nahe beieinander angebracht, sodass aus dem Vergleich der zugehörigen Absorptionsrate aus den jeweils zugeordneten L-förmigen Detektorzeilen ein Stereobildpaar abgeleitet werden kann. Eine dritte Röntgenquelle ist ebenfalls an der oberen Kante des Transportschachtes versetzt zu den beiden anderen und zur Laufrichtung des Gepäckstücks angeordnet. Die Röntgenquellen liefern fächerförmige Strahlen, die auf die jeweils gegenüberliegende L-förmige Detektorzeile auftreffen. Die Ausrichtung der Röntgenquellen ist senkrecht zur Laufrichtung des Gepäckstückes.

Aus der DE 41 37 510 A ist des Weiteren ein Scanner zur Untersuchung von Prüfobjekten mit durchdringender Strahlung bekannt, um Gegenstände des Prüfobjektes dreidimensional darzustellen. Die Gegenstände werden durch zwei fächerförmige Strahlenbündel durchstrahlt, wobei der Winkel zwischen der Ebene eines Strahlenbündels und der Transportrichtung der Transportstrecke für die Gegenstände von 90° abweicht. Die Ausgangssignale der Detektorzeilen werden so weiterverarbeitet, dass für den Betrachter eine 3D Darstellung entsteht. Die Erzielung mehrerer ortsfester Strahlenbündel von einer einzigen Strahlenquelle erfolgt mit einem entsprechend ausgebildeten Kollimator. Alternativ kann auch nur ein Strahlenbündel vorgesehen werden, dessen Winkel veränderbar ist, sodass bei mehreren Durchläufen der Prüfobjekte Informationen entsprechend unterschiedlicher Durchstrahlungsrichtungen gewonnen werden. Die Detektorzeilen sind selbst weiterhin parallel zur Transportrichtung der Transportstrecke ausgerichtet.

Hieraus stellt sich die Aufgabe der Erfindung, eine Vorrichtung der gattungsgemäßen Art aufzuzeigen, die einen geringen Platzbedarf aufweist.

Gelöst wird die Aufgabe durch die Merkmale des Patentanspruchs 1 und 2.

Der Erfindung liegt die Idee zugrunde, zur Verringerung des Platzbedarfs wenigstens zwei ionisierende Strahlungen unterschiedlicher Strahlenquellen zu kreuzen, wobei wenigstens eine dieser Strahlungen nicht mehr senkrecht zur Transportrichtung verläuft, und dabei wenigstens zwei Detektoranordnungen wenigstens teilweise sich verschränkend auf diese Strahlungen auszurichten. So kann bereits mit Hilfe von zwei Strahlenquellen und drei Detektoranordnungen ein räumliches Abbild eines Objektes beim Transport durch die unter verschiedenen Strahlenwinkeln auf das Objekt wirkenden Strahlungen erzeugt werden.

Vorteilhafte Ausgestaltungen sind in den Unteransprüchen aufgezeigt.

In einem bevorzugten Variante wird mit Hilfe von drei Strahlenquellen und fünf Detektoranordnungen ein zu durchleuchtendes Objekt aus wenigstens fünf unterschiedlichen Richtungen während des Transportes innerhalb der Vorrichtung durchleuchtet und dabei gleichzeitig ein quasi 3-D (dreidimensionales) Modell des Objektes erzeugt. Dabei sind vorzugsweise zwei der fünf Detektoranordnungen ineinander verschränkt ausgerichtet.

Vorteilhaft ist eine Anordnung der vorderen Strahlenquelle rechts und der nachfolgenden, dahinter liegenden Strahlenquelle links unterhalb der Transporteinrichtung. Beide sind zueinander versetzt und in Transportrichtung hintereinander angebracht. Die dritte Strahlenquelle ist dagegen vorzugsweise oberhalb der Transporteinrichtung angebracht.

Es ist aber auch vorgesehen, die vordere Strahlenquelle oberhalb der Transporteinrichtung anzuordnen und die beiden hinteren Strahlenquellen unterhalb der Transporteinrichtung anzubringen.

Vorzugsweise sind die Detektoranordnungen als L-förmige Detektorzeilen ausgeführt, die aus mehreren, hintereinander angeordneten Detektorpaaren aufgebaut sind.

Vorzugsweise wird die Vorrichtung in einer Multiview-Anlage zur automatischen Materialbestimmung mittels Röntgenstrahlen eingesetzt, wobei mit Hilfe der gewonnenen Signale neben der Absorptionsrate auch die Dicke bzw. das Volumen und daraus die Dichte der im Objekt befindlichen Gegenstände ermittelt werden. Aus der Absorptionsrate und der Dichte kann dann die Materialart der im Objekt befindlichen und gerade durchleuchteten Gegenstände exakt bestimmt werden.

Weitere Vorteile ergeben sich aus der folgenden Zeichnungsbeschreibung. In den Zeichnungen sind Ausführungsbeispiel der Erfindung dargestellt, die zahlreiche Merkmale in Kombination enthalten. Der Fachmann wird die Merkmale zweckmäßigerweise auch einzeln betrachten und zu sinnvollen weiteren Kombinationen zusammenfassen.

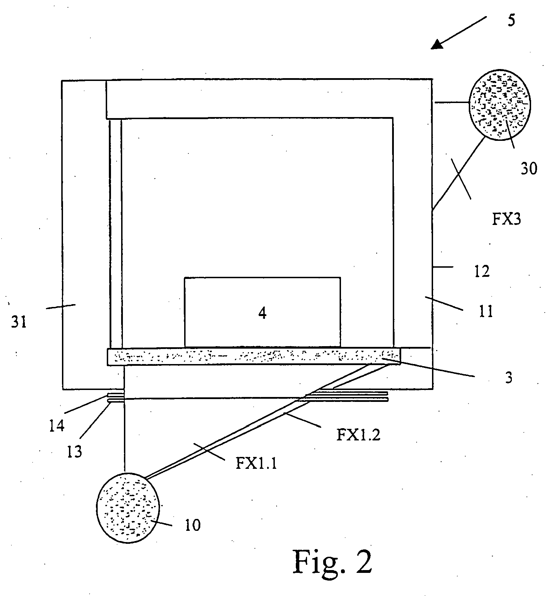

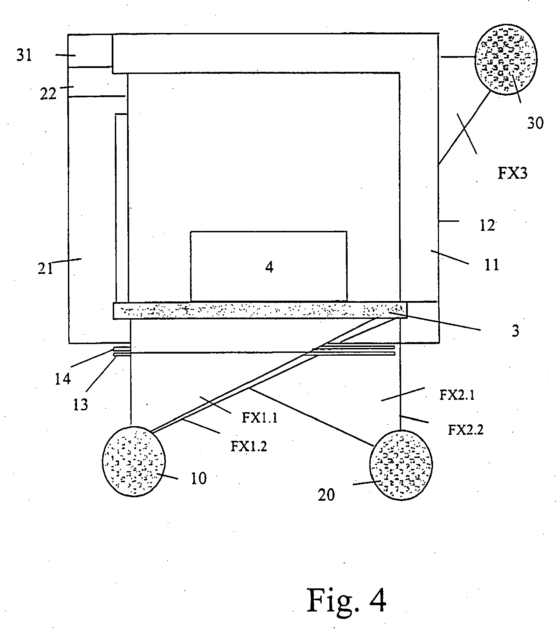

Es zeigt
Fig. 1
   eine Prinzipdarstellung einer Vorrichtung,
Fig. 2
   einen Durchleuchtungsbereich in einer Vorderansicht,
Fig. 3
   den Durchleuchtungsbereich aus Fig.2 in einer Seitenansicht ohne Objekt.
Fig.4
   eine bevorzugte Variante der Vorrichtung
Fig.5
   den Durchleuchtungsbereich aus Fig.4 in einer Seitenansicht ohne Objekt.

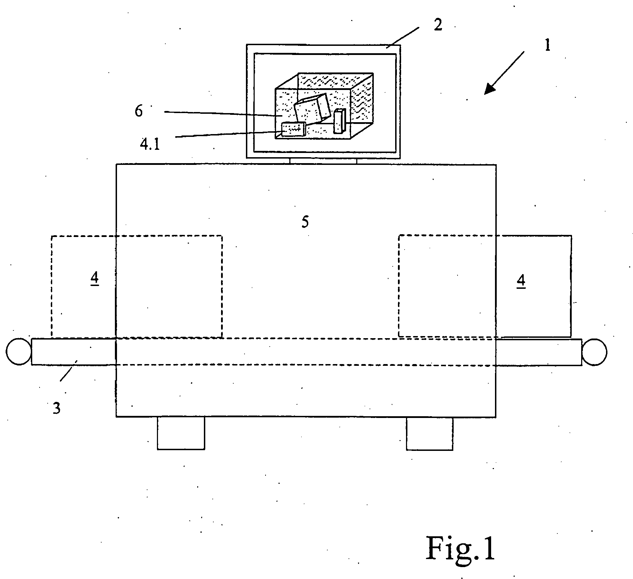

Fig. 1 zeigt in einer allgemeinen Ansicht eine einfache Ausführungsform einer erfindungsgemäßen Vorrichtung 1 zur Durchleuchtung von Objekten 4, mit einem Monitor 2, einer Transportstrecke 3, einem zu durchleuchtenden Objekt 4 sowie einem Durchleuchtungsbereich 5. Auf dem Monitor 2 ist ein Modell des Objektes 4 mit darin befindlichen Gegenständen 4.1 abgebildet.

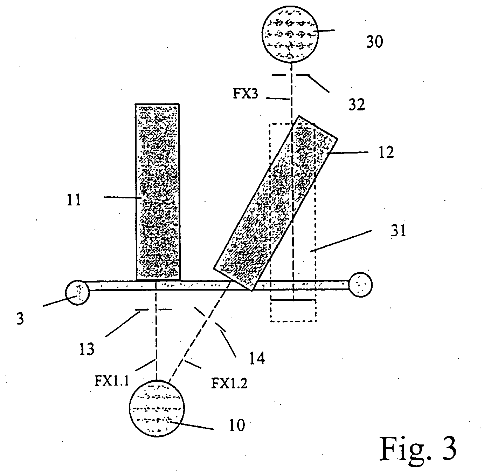

Wie in Fig.2 in einer Vorderansicht und in Fig. 3 in einer Seitenansicht dargestellt, sind um die Transportstrecke 3 zwei unterschiedliche Strahlenquellen 10, 30 in verschiedenen Ebenen angeordnet. Des weiteren befinden sich drei Detektoranordnungen 11, 12, 31 oberhalb bzw. unterhalb der Transportstrecke 3. Zur Ausblendung zweier ionisierender Strahlungen bzw. Strahlen FX1.1, FX1.2 , beispielsweise zweier Röntgenstrahlen gleicher Energien, sind ein Doppel - oder zwei Einzelkollimatoren 13,14 vor der Strahlenquelle 10 angeordnet. Vor der Strahlenquelle 30 ist ein weiterer Kollimator 32 vorgesehen, der hierbei nur einen ionisierende Strahlung FX3 ausblendet. Die beiden Detektoranordnungen 11, 12 sind auf die Strahlen FX1.1, FX1.2 der gemeinsame Strahlenquellen 10 ausgerichtet , so daß diese zueinander verwinkelt angeordnet sind. In einer platzsparenden Ausführung kreuzt einer der beiden Strahlen FX1.1 oder FX1.2 die Strahlung FX3, wozu eine der beiden Detektoranordnungen 11,12 zur Detektoranordnung 31 winkelversetzt bzw. verkippt und mit dieser teilweise bzw. leicht verschränkt angebracht wird, wobei verschränkt im Sinne dieser Anmeldung auch bedeutet, daß die Detektoranordnungen 31 senkrecht zur verkippten Detektoranordnung 11,12 stehen kann, im vorliegenden Ausführungsbeispiel zur Detektoranordnung 12. Winkelversetzt im Sinne der Anmeldung bedeutet, daß ausgehend von einem gemeinsamen Brennpunkt in der Strahlenquelle 10 die Strahlungen FX 1.1 und FX 1.2 in einem vorbestimmten Winkel auseinandergehend abgestrahlt bzw. ausgeblendet werden. Durch die Verschränkung der Detektoranordnungen 12, 31 kann der Abstand der beiden Strahlenquellen 10, 30 zueinander verringert werden. Eine weitere Platzeinsparung kann erreicht werden, wenn die Strahlenquelle 30 so angebaut sein, daß die Strahlung FX 3 gleichfalls nicht mehr senkrecht zur Transportebene verläuft, sondern von oben kommend entgegen der Strahlung FX1.2. In diesem Fall können die Detektoranordnung 31 und die Detektoranordnung 12 noch weiter ineinander verschränkt angebracht werden. Auch eine Anordnung der Strahlenquelle 30 unterhalb der Transportstrecke 3 in äquivalenter Art und Weise wie oberhalb ist möglich.

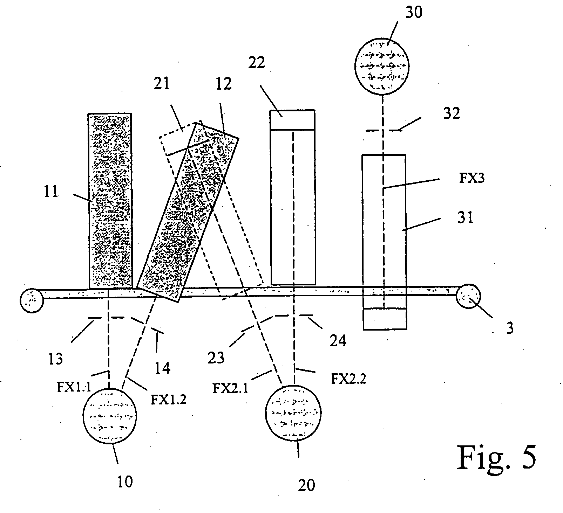

In einer bevorzugten Ausführung nach Fig. 4 und 5 sind drei Strahlenquellen 10,20,30 in verschiedenen Ebenen angeordnet, was insbesondere in Fig.5 sichtbar dargestellt ist. Dabei befinden sich fünf Detektoranordnungen 11,12,21,22,31 oberhalb bzw. unterhalb der Transportstrecke 3. Diese Detektoranordnungen 11,12,21,22,31 sind vorzugsweise als L-förmige Detektorzeilen ausgebildet. Aber auch eine Ausbildung als U-förmige Detektorzeilen sowie Variationen beider ist möglich.

Die beiden in Transportrichtung vorderen Strahlenquellen 10, 20 sind hintereinander, vorzugsweise unterhalb der Transporteinrichtung 3 rechts und links angebracht. Diesen sind die Detektorzeilen 11 und 12 sowie die Detektorzeilen 21 und 22 zugeordnet, die oberhalb der Transporteinrichtung 3 zu den Strahlenquellen 10, 20 ausgerichtet sind. Diesen Strahlenquellen 10, 20 sind Kollimatoren 13,14 bzw. 23, 24 zugeordnet, durch die ein relevanter Teil der Strahlung ausgeblendet wird, wodurch zwei zueinander winkelversetzte Strahlungen FX1.1 und FX1.2 bzw. FX2.1 und FX2.2 erzeugt werden. Diese Strahlungen FX1.1 und FX1.2 bzw. FX2.1 und FX2.2 sind vorzugsweise als Strahlenfächer ausgebildet. Die Kollimatoren 13,14 bzw. 23, 24 sind hierbei vorzugsweise als Schlitzkollimatoren ausgeführt. Die winklige Ausrichtung der Schlitzkollimatoren 13,14 bzw. 23, 24 zueinander erfolgt beipielsweise im Winkel von 30° bis 90°. Die Kollimatoren 13 und 24 sind dabei vorzugsweise annähernd parallel zur Transportebene angeordnet. Mit dieser Anordnung werden somit gleichzeitig vier Strahlrichtungen mit nur zwei Strahlenquellen 10, 20 erzeugt.
Die Detektorzeilen 12 und 21 sind, wie in Fig. 5 deutlich erkennbar, winkelversetzt auf die Strahlen FX1.2 bzw. FX2.1 ausgerichtet, wobei beide Detektorzeilen 12, 21 verschränkt ineinander angeordnet sind. Dadurch wird eine platzsparende und kompakte Vorrichtung 1 vorgeschlagen. Je weiter diese Detektorzeilen 12, 21 ineinander verschränkt werden, desto weniger Platz wird innerhalb der Vorrichtung 1 benötigt. Vorteilhaft ist eine Verschränkung der Detektorzeilen 12 und 21 zueinander in einem Winkel von 30 bis ca. 60°.

Ein fünfter Strahl FX 3 für eine fünfte Strahlrichtung wird an der Strahlenquelle 30 mit Hilfe eines weiteren Kollimators 32 vor der Strahlenquelle 30 erzeugt. Diese dritte Strahlenquelle 30 ist deshalb vorzugsweise oberhalb der Transporteinrichtung, beispielsweise oben rechts, im hinteren Bereich des Durchleuchtungsbereiches 5 angeordnet. Der als Schlitzkollimator ausgeführte Kollimator 32 ist zur Erzeugung eines vorzugsweise fächerförmigen Strahles FX 3 dabei senkrecht zur Transportebene geführt. Die mit dem Röntgengenerator 30 zusammenwirkende Detektorzeile 31 ist unterhalb der Transporteinrichtung 3 angebracht.

Die Detektorzeilen 11,12, 21,22,31 aus Fig. 2,3 und Fig. 4,5 sind in bekannter Art und Weise mit einem nicht näher dargestellten Rechner zur Auswertung der in den Detektorzeilen 11,12, 21,22, 31 herkömmlich erzeugten Signale verbunden. Je nach Abschwächung der einzelnen Strahlen FX 1.1 - FX 3 werden dabei unterschiedlich große Signale generiert. Dazu wird das zu durchleuchtende Objekt 4 über die Transportstrecke bzw. Transporteinrichtung 3 durch den Durchleuchtungsbereich 5 verbracht, während dessen das Objekt 4 mittels drei bzw. fünf Strahlen FX1.1 - FX3 aus drei bzw. fünf unterschiedlichen Richtungen durchleuchtet wird. Diese Durchleuchtung kann als Modell 6 auf dem Monitor 2 sichtbar gemacht werden, wobei dieses Objekt 4 mit den darin befindlichen Gegenständen 4.1 nach entsprechender Aufbereitung auch dreidimensional dargestellt werden kann.
Aus den an den Detektorzeilen 11,12,21,22,31 erzeugten Signalen wird neben der Absorption auch die Dicke bzw. das Volumen der im Objekt 4 befindlichen Gegenstände 4.1 ermittelt. Aus der Dicke bzw. dem Volumen wird dann die Dichte ermittelt. Mit diesen beiden Meßgrößen wird im Rechner das Material bzw. die Materialart mit Hilfe von im Rechner hinterlegten Vergleichsgrößen exakt bestimmt.

Es versteht sich daß die Reihenfolge der Strahlenquellen 10, 20, 30 und der Detektorzeilen 11, 12, 21, 22, 31 als auch deren örtliche Anbringung vertauschbar sind.

Des weiteren kann es sich bei den Strahlenquellen 10, 20, 30 um Röntgengeneratoren, Gammastrahlerzeugern usw. handeln. Sind die erzeugten Strahlen FX1.1, FX1.2, FX2.1, FX2.2 sowie FX3 Röntgenstrahlen, sind die Detektoranordnungen 11,12,21,22,31 als Szintilationsdetektoren ausgeführt, welche in bekannter Art und Weise in Detektorzeilen zusammengefaßt sind.
Neben den bereits erwähnten Strahlenfächern können beispielsweise auch sogenannte pencil beams in bekannter Art und Weise ausgeblendet und zur Durchleuchtung des Objektes 4 herangezogen werden.

Die beschriebene Anordnung innerhalb der Vorrichtung 1 ist nicht auf eine Anwendung für ein Handgepäck- Röntgenprüfgerät beschränkt. Eine solche Anordnung kann auch bei größeren Container-Röntgenprüfanlagen usw. vorgesehen werden. Auch ist der Einsatz nicht auf den reinen Flugsicherheitsbereich abgestellt.

## Patentansprüche

1. Vorrichtung (1) zur Durchleuchtung von Objekten (4), welche mit Hilfe einer Transporteinrichtung (3) durch einen Durchleuchtungsbereich (5) durchgeführt werden, die Vorrichtung umfassend die Transporteinrichtung (3), eine erste und eine zweite Strahlenquelle (10, 30) und drei Detektoranordnungen (11, 12, 31) wobei um die Transporteinrichtung die erste und die zweite Strahlenquelle (10, 30) und die drei Detektoranordnungen (11, 12, 31) ausgebildet als Detektorzeilen angebracht sind,
**dadurch gekennzeichnet, dass**
die erste Strahlenquelle (10) so eingerichtet ist, dass
- zur Erzeugung von zwei ionisierenden Strahlen (FX1.1, FX1.2) wenigstens mehr als ein Strahl ausgeblendet wird,
dass die erste und die zweite Strahlenquelle so eingerichtet sind, dass sich ein ionisierender Strahl (FX1.1, FX1.2, FX3) der ersten und ein ionisierender Strahl der zweiten Strahlenquelle kreuzen, wobei
- zwei der Detektoranordnungen (11, 12) auf die Strahlen aus der ersten Strahlenquelle (10) ausgerichtet und winkelversetzt bzw. verkippt zueinander angeordnet sind,
- und eine dieser beiden Detektoranordnungen (12) mit der dritten Detektoranordnung (31) teilweise bzw. leicht verschränkt angebracht ist, wobei die dritte Detektoranordnung (31) auf ionisierenden Strahlen (FX3) aus der zweiten Strahlenquelle (30) ausgerichtet ist, wobei die zwei Strahlenquellen (10, 30) mit den drei Detektoranordnungen (11, 12, 31) zusammenwirken, wobei die zweite Strahlenquelle (30) so angebaut ist, dass die Strahlung (FX 3) nicht senkrecht zur Transporteinrichtung (3) weist, sondern entgegen einer der Strahlungen (FX 1.1, FX 1.2) der ersten Strahlenquelle unter einem Winkel zur Transportebene der Transporteinrichtung (3) verläuft.

2. Vorrichtung (1) zur Durchleuchtung von Objekten (4), welche mit Hilfe einer Transporteinrichtung (3) durch einen Durchleuchtungsbereich (5) durchgeführt werden, die Vorrichtung umfassend eine Transporteinrichtung (3), eine erste, eine zweite und eine dritte Strahlenquelle (10, 20, 30) und fünf Detektoranordnungen (11 12, 21 22, 31), wobei um die Transporteinrichtung die erste, die zweite und die dritte Strahlenquelle (10, 20, 30) und die fünf Detektoranordnungen (11, 12, 21, 22, 31) ausgebildet als Detektorzeilen angebracht sind,
**dadurch gekennzeichnet, dass**
die erste Strahlenquelle so eingerichtet ist, dass
- zur Erzeugung von zwei ionisierenden Strahlen (FX1.1, FX1.2) wenigstens mehr als ein Strahl ausgeblendet wird,
wobei die erste und die zweite Strahlenquelle (10, 20) so eingerichtet sind, dass sich ein ionisierender Strahl der ersten Strahlenquelle (10) und ein ionisierender Strahl der zweiten Strahlenquelle (20) kreuzen, wobei
- zwei der Detektoranordnungen (11, 12) auf die Strahlen aus der ersten Strahlenquelle (10) ausgerichtet und winkelversetzt bzw. verkippt zueinander angeordnet sind,
- und eine dieser beiden Detektoranordnungen (12) mit der dritten Detektoranordnung (21) teilweise bzw. leicht verschränkt angebracht ist, wobei die dritte Detektoranordnung (21) auf ionisierenden Strahlen (FX3) aus der zweiten Strahlenquelle (30) ausgerichtet ist, wobei die drei Strahlenquellen (10, 20, 30) mit den fünf Detektoranordnungen (11,12, 21, 22, 31) zusammenwirken, wobei vier der Detektoranordnungen (11,12, 21, 22) auf vier der an zwei Strahlenquellen (10,20) erzeugten Strahlen (FX1.1, FX 1.2, FX2.1, FX2.2.) ausgerichtet sind, wozu zwei dieser Detektoranordnungen (12,21) ineinander verschränkt angeordnet sind, sodass diese auf einen der zwei Strahlen (FX1.2, FX2.1) der ersten und zweiten Strahlenquelle (10, 20) ausgerichtet sind, wobei sich diese Strahlen (FX1.2, FX2.1) in ihren Strahlengängen kreuzen.

3. Vorrichtung nach Anspruch 1, **dadurch gekennzeichnet, dass** zur Erzeugung von wenigstens zwei ionisierenden Strahlen (FX1.1, FX1.2; FX2.1, FX2.2) an der ersten Strahlenquelle (10, 20) vor der ersten Strahlenquelle (10,20) ein Doppelkollimator oder zwei Einzelkollimatoren (13, 14, 23, 24) angeordnet ist, welche auf einen gemeinsamen Brennpunkt der wenigstens zwei ionisierenden Strahlen (FX 1.1, FX 1.2, FX 2.1, FX 2.2) ausgerichtet ist.

4. Vorrichtung nach Anspruch 2, **dadurch gekennzeichnet, dass** zur Erzeugung von wenigstens zwei ionisierenden Strahlen (FX1.1, FX1.2; FX2.1, FX2.2) an der ersten und zweiten Strahlenquelle (10, 20) vor der ersten und zweiten Strahlenquelle (10,20) ein Doppelkollimator oder zwei Einzelkollimatoren (13, 14, 23, 24) angeordnet ist, welche auf einen gemeinsamen Brennpunkt der wenigstens zwei ionisierenden Strahlen (FX 1.1, FX 1.2, FX 2.1, FX 2.2) ausgerichtet sind.

5. Vorrichtung nach Anspruch 3 oder 4, **dadurch gekennzeichnet, dass** die so winkelversetzt ausgerichteten Kollimatoren (13,14, 23, 24) als Schlitzkollimatoren ausgeführt sind, welche zueinander um jeweils 30° bis 90° verwinkelt angebracht sind.

6. Vorrichtung nach einem der Ansprüche 3 oder 4, **dadurch gekennzeichnet, dass** einer der beiden Kollimatoren (13, 14, 23, 24) annähernd parallel zur Transporteinrichtung (3) geführt ist.

7. Vorrichtung nach Anspruch 2, **dadurch gekennzeichnet, dass** der dritten Strahlenquelle (30) ein Kollimator (32) zugeordnet ist, der senkrecht zur Transportstrecke (3) verläuft.

8. Vorrichtung nach Anspruch 7, **dadurch gekennzeichnet, dass** der Kollimator (32) ein Schlitzkollimator ist.

9. Vorrichtung nach einem der Ansprüche 2 bis 8, **dadurch gekennzeichnet, dass** die erste und zweite Strahlenquelle (10, 20) unterhalb der Transporteinrichtung (3) rechts und links angeordnet sind, wobei beide zueinander versetzt und in Transportrichtung hintereinander liegend angebracht sind und die dritte Strahlenquelle (30) oberhalb der Transporteinrichtung (3) im hinteren Bereich des Durchleuchtungsbereiches (5) angeordnet ist.

10. Vorrichtung nach einem der vorgenannten Ansprüche 1 bis 9, **dadurch gekennzeichnet, dass** die Detektoranordnungen (11, 12, 21, 22, 31) als Szintillationsdetektoren ausgeführt sind.

11. Vorrichtung nach einem der Ansprüche 1 bis 10, **dadurch gekennzeichnet, dass** die Detektorzeilen (11, 12, 21, 22, 31) L-förmig oder U-förmig aufgebaut sind.

## Claims

1. Apparatus (1) for transmissive irradiation of objects (4) which are guided through a transmissive-irradiation region (5) using a transport device (3), with the apparatus comprising the transport device (3), a first and a second radiation source (10, 30) and three detector arrangements (11, 12, 31), wherein the first and the second radiation source (10, 30) and the three detector arrangements (11, 12, 31), in the form of detector lines, are arranged around the transport device, **characterized in that**
the first radiation source (10) is configured such that
- at least more than one beam is collimated for producing two ionizing beams (FX1.1, FX1.2),
**in that** the first and the second radiation source are configured such that an ionizing beam (FX1.1, FX1.2, FX3) of the first radiation source and an ionizing beam of the second radiation source intersect, wherein
- two of the detector arrangements (11, 12) are oriented towards the beams from the first radiation source (10) and are arranged with an angular offset or an inclination with respect to one another,
- and one of these two detector arrangements (12) is mounted so as to be partially or slightly interleaved with the third detector arrangement (31), wherein the third detector arrangement (31) is oriented towards ionizing beams (FX3) from the second radiation source (30), wherein the two radiation sources (10, 30) interact with the three detector arrangements (11, 12, 31), wherein the second radiation source (30) is mounted such that the radiation (FX3) is not perpendicular to the transport device (3) but extends, counter to one of the radiations (FX1.1, FX1.2) of the first radiation source, at an angle with respect to the transport plane of the transport device (3).

2. Apparatus (1) for the transmissive irradiation of objects (4) with which are guided through a transmissive-irradiation region (5) using a transport device (3), the apparatus comprising a transport device (3), a first, a second and a third radiation source (10, 20, 30) and five detector arrangements (11 12, 21 22, 31), wherein the first, the second and the third radiation source (10, 20, 30) and the five detector arrangements (11, 12, 21, 22, 31), in the form of detector lines, are arranged around the transport device,
**characterized in that**
the first radiation source is configured such that
- at least more than one beam is collimated for producing two ionizing beams (FX1.1, FX1.2),
wherein the first and the second radiation source (10, 20) are configured such that an ionizing beam of the first radiation source (10) and an ionizing beam of the second radiation source (20) intersect, wherein
- two of the detector arrangements (11, 12) are oriented towards the beams from the first radiation source (10) and are arranged with an angular offset or inclination with respect to one another,
- and one of these two detector arrangements (12) is mounted so as to be partially or slightly interleaved with the third detector arrangement (21), wherein the third detector arrangement (21) is oriented towards ionizing beams (FX3) from the second radiation source (30), wherein the three radiation sources (10, 20, 30) interact with the five detector arrangements (11, 12, 21, 22, 31), wherein four of the detector arrangements (11, 12, 21, 22) are oriented towards four of the beams (FX1.1, FX1.2, FX2.1, FX2.2) which are produced at two radiation sources (10, 20), to which end two of these detector arrangements (12, 21) are arranged such that they are interleaved, with the result that they are oriented towards one of the two beams (FX1.2, FX2.1) of the first and second radiation sources (10, 20), wherein these beams (FX1.2, FX2.1) intersect in terms of their beam paths.

3. Apparatus according to Claim 1, **characterized in that**, for producing at least two ionizing beams (FX1.1, FX1.2; FX2.1, FX2.2) at the first radiation source (10, 20), a double collimator or two individual collimators (13, 14, 23, 24) is/are arranged upstream of the first radiation source (10, 20), which is oriented towards a common focal point of the at least two ionizing beams (FX1.1, FX1.2, FX2.1, FX2.2).

4. Apparatus according to Claim 2, **characterized in that**, for producing at least two ionizing beams (FX1.1, FX1.2; FX2.1, FX2.2) at the first and second radiation sources (10, 20), a double collimator or two individual collimators (13, 14, 23, 24) is/are arranged upstream of the first and second radiation sources (10, 20), which are oriented towards a common focal point of the at least two ionizing beams (FX1.1, FX1.2, FX2.1, FX2.2).

5. Apparatus according to Claim 3 or 4, **characterized in that** the collimators (13, 14, 23, 24), which are oriented with said angular offset, are embodied in the form of slit collimators, which are attached with a respective angle of 30° to 90° with respect to one another.

6. Apparatus according to either of Claims 3 and 4, **characterized in that** one of the two collimators (13, 14, 23, 24) is guided approximately parallel with respect to the transport device (3).

7. Apparatus according to Claim 2, **characterized in that** the third radiation source (30) is assigned a collimator (32) which extends perpendicularly to the transport section (3).

8. Apparatus according to Claim 7, **characterized in that** the collimator (32) is a slit collimator.

9. Apparatus according to one of Claims 2 to 8, **characterized in that** the first and second radiation sources (10, 20) are arranged on the right and left below the transport device (3), wherein both are attached with a mutual offset and located one behind the other in the transport direction, and the third radiation source (30) is arranged above the transport device (3) in the rear region of the transmissive-irradiation region (5).

10. Apparatus according to one of the aforementioned Claims 1 to 9, **characterized in that** the detector arrangements (11, 12, 21, 22, 31) are embodied in the form of scintillation detectors.

11. Apparatus according to one of Claims 1 to 10, **characterized in that** the detector lines (11, 12, 21, 22, 31) are constructed to be L-shaped or U-shaped.

## Revendications

1. Système (1) pour radioscopier des objets (4), lesquels sont passés à travers une zone de radioscopie (5) à l'aide d'un dispositif de transport (3), le système comprenant le dispositif de transport (3), une première et une deuxième source de rayons (10, 30) et trois arrangements détecteurs (11, 12, 31), la première et la deuxième source de rayons (10, 30) ainsi que les trois arrangements détecteurs (11, 12, 31), réalisés sous la forme de lignes de détecteurs, étant disposés autour du dispositif de transport,
**caractérisé en ce que**
la première source de rayons (10) est conçue de telle sorte que
- en vue de générer deux rayons ionisants (FX1.1, FX1.2), au moins plus d'un rayon est collimaté,
**en ce que** la première et la deuxième source de rayons sont conçues de telle sorte qu'un rayon ionisant (FX1.1, FX1.2, FX3) de la première source de rayons et un rayon ionisant de la deuxième source de rayons se croisent,
- deux arrangements détecteurs (11, 12) étant orientés sur les rayons de la première source de rayons (10) et étant disposés avec un décalage angulaire ou un défaut d'alignement angulaire l'un par rapport à l'autre,
- et l'un de ces deux arrangements détecteurs (12) étant disposé partiellement ou légèrement entrecroisé avec le troisième arrangement détecteur (31), le troisième arrangement détecteur (31) étant orienté sur les rayons ionisants (FX3) issus de la deuxième source de rayons (30), les deux sources de rayons (10, 30) coopérant avec les trois arrangements détecteurs (11, 12, 31), la deuxième source de rayons (30) étant montée de telle sorte que le rayonnement (FX3) n'est pas orienté perpendiculairement au dispositif de transport (3), mais s'étend à l'opposé de l'un des rayonnements (FX1.1, FX1.2) de la première source de rayonnement sous un angle donné par rapport au plan de transport du dispositif de transport (3).

2. Système (1) pour radioscopier des objets (4), lesquels sont passés à travers une zone de radioscopie (5) à l'aide d'un dispositif de transport (3), le système comprenant un dispositif de transport (3), une première, une deuxième et une troisième source de rayons (10, 20, 30) et cinq arrangements détecteurs (11, 12, 21, 22, 31), la première, la deuxième et la troisième source de rayons (10, 20, 30) ainsi que les cinq arrangements détecteurs (11, 12, 21, 22, 31), réalisés sous la forme de lignes de détecteurs, étant disposés autour du dispositif de transport,
**caractérisé en ce que**
la première source de rayons est conçue de telle sorte que
- en vue de générer deux rayons ionisants (FX1.1, FX1.2), au moins plus d'un rayon est collimaté,
la première et la deuxième source de rayons (10, 20) étant conçues de telle sorte qu'un rayon ionisant de la première source de rayons (10) et un rayon ionisant de la deuxième source de rayons (20) se croisent,
- deux des arrangements détecteurs (11, 12) étant orientés sur les rayons de la première source de rayons (10) et étant disposés avec un décalage angulaire ou un défaut d'alignement angulaire l'un par rapport à l'autre,
- et l'un de ces deux arrangements détecteurs (12) étant disposé partiellement ou légèrement entrecroisé avec le troisième arrangement détecteur (21), le troisième arrangement détecteur (21) étant orienté sur les rayons ionisants (FX3) issus de la deuxième source de rayons (30), les trois sources de rayons (10, 20, 30) coopérant avec les cinq arrangements détecteurs (11, 12, 21, 22, 31), quatre des arrangements détecteurs (11, 12, 21, 22) étant orientés sur quatre des rayons (FX1.1, FX1.2, FX2.1, FX2.2) générés au niveau de deux sources de rayons (10, 20), deux de ces arrangements détecteurs (12, 21) étant à cet effet disposés entrecroisés l'un dans l'autre, de sorte que ceux-ci sont orientés sur l'un des deux rayons (FX1.2, FX2.1) de la première et de la deuxième source de rayonnement (10, 20), ces rayons (FX1.2, FX2.1) se croisant dans leurs trajets de rayon.

3. Système selon la revendication 1, **caractérisé en ce que** pour générer au moins deux rayons ionisants (FX1.1, FX1.2 ; FX2.1, FX2.2), un double collimateur ou deux collimateurs individuels (13, 14, 23, 24) sont disposés au niveau de la première source de rayons (10, 20), devant la première source de rayons (10, 20), lesquels sont orientés sur un foyer commun des au moins deux rayons ionisants (FX1.1, FX1.2, FX2.1, FX2.2).

4. Système selon la revendication 2, **caractérisé en ce que** pour générer au moins deux rayons ionisants (FX1.1, FX1.2 ; FX2.1, FX2.2), un double collimateur ou deux collimateurs individuels (13, 14, 23, 24) sont disposés au niveau de la première et de la deuxième source de rayons (10, 20), devant la première et la deuxième source de rayons (10, 20), lesquels sont orientés sur un foyer commun des au moins deux rayons ionisants (FX1.1, FX1.2, FX2.1, FX2.2).

5. Système selon la revendication 3 ou 4, **caractérisé en ce que** les collimateurs (13, 14, 23, 24) ainsi orientés avec un décalage angulaire sont réalisés sous la forme de collimateurs à fente qui sont montés avec un décalage angulaire respectif de 30° à 90° l'un par rapport à l'autre.

6. Système selon l'une des revendications 3 ou 4, **caractérisé en ce que** l'un des deux collimateurs (13, 14, 23, 24) est guidé approximativement en parallèle avec le dispositif de transport (3).

7. Système selon la revendication 2, **caractérisé en ce qu'**à la troisième source de rayons (30) est associé un collimateur (32) qui s'étend perpendiculairement au parcours de transport (3).

8. Système selon la revendication 7, **caractérisé en ce que** le collimateur (32) est un collimateur à fente.

9. Système selon l'une des revendications 2 à 8, **caractérisé en ce que** la première et la deuxième source de rayons (10, 20) sont disposées à droite et à gauche au-dessous du dispositif de transport (3), les deux étant décalées l'une par rapport à l'autre et étant montées l'une derrière l'autre dans le sens du transport et la troisième source de rayons (30) étant disposée au-dessus du dispositif de transport (3) dans la zone arrière de la zone de radioscopie (5).

10. Système selon l'une des revendications 1 à 9, **caractérisé en ce que** les arrangements détecteurs (11, 12, 21, 22, 31) sont réalisés sous la forme de détecteurs de scintillations.

11. Système selon l'une des revendications 1 à 10, **caractérisé en ce que** les lignes de détecteurs (11, 12, 21, 22, 31) sont constituées en forme de L ou en forme de U.
